(19) Europäisches Patentamt
European Patent Office
Office européen des brevets

(11) **EP 4 746 074 A1**

(12) **EUROPEAN PATENT APPLICATION**

(43) Date of publication:
**20.05.2026 Bulletin 2026/21**

(21) Application number: **25203955.7**

(22) Date of filing: **23.09.2025**

(51) International Patent Classification (IPC):
*H01M 4/58* (2010.01)      *H01M 10/054* (2010.01)
*H01M 10/36* (2010.01)      *H01M 10/0561* (2010.01)

(52) Cooperative Patent Classification (CPC):
**H01M 10/36; H01M 4/58; H01M 4/582;**
**H01M 10/054; H01M 10/0561**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **13.11.2024 JP 2024198450**

(71) Applicant: **TOYOTA JIDOSHA KABUSHIKI**
**KAISHA**
**Toyota-shi, Aichi-ken 471-8571 (JP)**

(72) Inventor: **NOI, Kousuke**
**Aichi-ken, 471-8571 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **POSITIVE ELECTRODE MIXTURE FOR FLUORIDE ION BATTERY, METHOD FOR ITS PRODUCTION, AND FLUORIDE ION BATTERY**

(57)    The present disclosure provides a positive electrode mixture for a fluoride ion battery that can improve battery coulombic efficiency and cycle characteristics, as well as a method for producing it, and a fluoride ion battery comprising the positive electrode mixture for a fluoride ion battery. The positive electrode mixture for a fluoride ion battery of the disclosure comprises covellite and a solid electrolyte. The ion conductivity of the solid electrolyte at 80°C is $5.0 \times 10^{-6}$ S/cm or greater. The method for producing a positive electrode mixture for a fluoride ion battery according to the disclosure comprises the following steps: providing a starting material containing covellite and a solid electrolyte, and mixing the starting material while applying mechanical impact to the starting material.

FIG. 1

**Description**

FIELD

The present disclosure relates to a positive electrode mixture for a fluoride ion battery, to a method for its production, and to a fluoride ion battery.

BACKGROUND

Compounds of Group 16 elements and copper are known as positive electrode active materials for fluoride ion batteries.

PTL 1, for example, discloses a fluoride ion battery wherein the positive electrode active material layer includes a positive electrode active material having a composition represented by $Cu_xS$ ($1 \leq x \leq 2$, and especially $1.8 \leq x \leq 2$).

PTL 2 discloses a positive electrode active material for a fluoride ion battery, which is copper selenide.

[CITATION LIST]

[PATENT LITERATURE]

[PTL 1] Japanese Unexamined Patent Publication No. 2018-186067
[PTL 2] Japanese Unexamined Patent Publication No. 2024-104108

SUMMARY

[TECHNICAL PROBLEM]

Fluoride ion batteries containing copper sulfide as a positive electrode active material are still in need of improvement from the viewpoint of coulombic efficiency and cycle characteristics.

It is an object of the present disclosure to provide a positive electrode mixture for a fluoride ion battery that can improve battery coulombic efficiency and cycle characteristics, as well as a method for producing it, and a fluoride ion battery comprising the positive electrode mixture for a fluoride ion battery.

[SOLUTION TO PROBLEM]

The present inventors have found that the aforementioned object can be achieved by the following means.

<Aspect 1>

A positive electrode mixture for a fluoride ion battery,

wherein the positive electrode mixture comprises covellite and a solid electrolyte, and
wherein the ion conductivity of the solid electrolyte at 80°C is $5.0 \times 10^{-6}$ S/cm or higher.

<Aspect 2>

The positive electrode mixture for a fluoride ion battery according to aspect 1, wherein the covellite has the composition of the following formula (1):

$$Cu_xS, \text{ wherein } 0.80 \leq x \leq 1.30 \qquad (1).$$

<Aspect 3>

The positive electrode mixture for a fluoride ion battery according to aspect 1 or 2, wherein the solid electrolyte has the composition of the following formula (2):

$$Pb_{1-y}Zr_yF_{2+2y}, \text{wherein, } 0 < y < 1 \qquad (2).$$

<Aspect 4>

The positive electrode mixture for a fluoride ion battery according to aspect 3, wherein y in formula (2) is 0.01 to 0.3.

<Aspect 5>

A fluoride ion battery,

having a positive electrode active material layer, and
the positive electrode active material layer comprising a positive electrode mixture for a fluoride ion battery according to any one of aspects 1 to 4.

<Aspect 6>

The method for producing a positive electrode mixture for a fluoride ion battery according to any one of aspects 1 to 4, comprising the following steps:

providing a starting material comprising covellite and a solid electrolyte, and
mixing the starting material while applying mechanical impact to the starting material.

[ADVANTAGEOUS EFFECTS OF INVENTION]

It is an object of the present disclosure to provide a positive electrode mixture for a fluoride ion battery that can improve battery coulombic efficiency and cycle characteristics, as well as a method for producing it, and a fluoride ion battery comprising the positive electrode mixture for a fluoride ion battery.

BRIEF DESCRIPTION OF DRAWINGS

Fig. 1 is a simplified cross-sectional view showing an example of a fluoride ion battery of the disclosure.
Fig. 2 is an XRD pattern for the positive electrode active material layer of Example 1.
Fig. 3 is an XRD pattern for the positive electrode active material layer of Comparative Example 1.
Fig. 4 is an XRD pattern for the positive electrode active material layer of Comparative Example 2.
Fig. 5 is a charge-discharge curve for the fluoride ion battery of Example 1.
Fig. 6 is a charge-discharge curve for the fluoride ion battery of Comparative Example 1.
Fig. 7 is a charge-discharge curve for the fluoride ion battery of Comparative Example 2.
Fig. 8 shows the cycle characteristic of charge capacity, discharge capacity, and coulombic efficiency for the fluoride ion battery of Example 1.
Fig. 9 shows the cycle characteristic of charge capacity, discharge capacity, and coulombic efficiency for the fluoride ion battery of Comparative Example 1.
Fig. 10 shows the cycle characteristic of charge capacity, discharge capacity, and coulombic efficiency for the fluoride ion battery of Comparative Example 2.

DESCRIPTION OF EMBODIMENTS

An embodiment of the disclosure will now be described in detail. The disclosure is not limited to the embodiment described below, however, and various modifications may be implemented which do not depart from the gist thereof.

<Positive electrode mixture for fluoride ion battery>

The positive electrode mixture for a fluoride ion battery of the disclosure comprises covellite and a solid electrolyte. In the positive electrode mixture for a fluoride ion battery of the disclosure, the ion conductivity of the solid electrolyte at 80°C is $5.0 \times 10^{-6}$ S/cm or greater.

A solid electrolyte having an ion conductivity of $5.0 \times 10^{-6}$ S/cm or greater at 80°C will hereunder also be referred to as "specific solid electrolyte".

The present inventors considered that one cause of insufficient coulombic efficiency and cycle characteristics in a conventional fluoride ion battery including a positive electrode active material that is non-covellite copper sulfide, such as a digenite, is the charge-discharge mechanism of the battery. Specifically, in a fluoride ion battery containing conventional copper sulfide as the positive electrode active material, charge-discharge may be accomplished by a conversion mechanism that notably alters the crystal structure of the copper sulfide and the lattice volume. This makes the particles less likely to contact with each other in the positive electrode active material layer, thus presumably resulting in the problem mentioned above.

However, the present inventors have found that a positive electrode mixture for a fluoride ion battery comprising covellite and a specific solid electrolyte improves battery coulombic efficiency and cycle characteristics. Without being restricted to any particular theory, the reason for this is conjectured to be as follows. Specifically, it is possible that with covellite as the positive electrode active material, occlusion and release of fluoride ions accompanying charge-discharge is accomplished with an insertion mechanism that does not notably change the crystal structure and lattice volume, thereby helping to make it less difficult for particles to contact each other in the positive electrode active material layer. Furthermore, since the positive electrode mixture for a fluoride ion battery of the disclosure contains a specific solid electrolyte, i.e. a solid electrolyte with high ion conductivity, in addition to covellite as the positive electrode active material, the effect of occluding and releasing fluoride ions by such an insertion mechanism can be optimized to improve the coulombic efficiency and cycle characteristics of the battery.

That the positive electrode mixture for a fluoride ion battery or the positive electrode active material layer containing the positive electrode mixture for a fluoride ion battery contains covellite can be confirmed by X-ray diffraction (XRD), for example. Specifically, the structure of covellite can be confirmed by XRD measurement of a sample of a positive electrode active material layer formed from the positive electrode mixture, in the discharged state before operation of the battery. The XRD measurement can be carried out by a concentration method in which CuKα rays are irradiated using a SmartLab by Rigaku Corp. as the X-ray diffractometer, under conditions with a tube voltage of 45 kV and a tube current of 200 mA. The measurement described above may be carried out after sealing the sample in an airtight sample stage with an argon atmosphere. The substrate on which the sample is mounted may be a non-reflecting Si board.

The elements of the positive electrode mixture for a fluoride ion battery of the disclosure will now be described.

<Copper sulfide>

The positive electrode mixture for a fluoride ion battery of the disclosure comprises covellite. A positive electrode mixture comprising covellite allows charge-discharge of a battery to be accomplished with a mechanism that is suited for improving battery coulombic efficiency and cycle characteristics.

Covellite is typically hexagonal copper sulfide having the composition CuS, and the space group $P6_3/mmc$. Covellite is also known as copper blue or covelline.

The covellite may have the composition of the following formula (1):

$$Cu_xS, \text{ wherein } 0.80 \leq x \leq 1.30 \qquad (1)$$

In formula (1), x may be 0.85 or greater, 0.90 or greater, 0.95 or greater or 1.00 or greater, and 1.25 or less, 1.20 or less, 1.15 or less, 1.10 or less, 1.05 or less or 1.00 or less, or it may be 1.00. If x is within this range it will be possible to effectively improve the coulombic efficiency and cycle characteristics of the battery.

The composition of the covellite can be identified by high-frequency inductively coupled plasma emission spectroscopy (ICP-AES), for example.

The covellite in the positive electrode mixture for a fluoride ion battery of the disclosure may be a commercial product, or it may be prepared by a common method.

The covellite in the positive electrode mixture for a fluoride ion battery of the disclosure functions as a positive electrode active material.

The content of the positive electrode active material in the positive electrode mixture may be 1 mass% or greater, 5 mass% or greater, 10 mass% or greater, 15 mass% or greater, 20 mass% or greater, 25 mass% or greater or 30 mass% or greater, and 100 mass% or lower, 80 mass% or lower, 60 mass% or lower, 50 mass% or lower, 45 mass% or lower, 40 mass% or lower, 35 mass% or lower or 30 mass% or lower, for example. The content may be 10 mass% to 50 mass%, 15 mass% to 45 mass% or 20 mass% to 40 mass%.

The positive electrode active material in the positive electrode mixture may be covellite alone, or it may be a combination of covellite with another positive electrode active material. Examples of positive electrode active materials other than covellite that may be used include the copper sulfide disclosed in PTL 1 ($Cu_xS$ ($1 \leq x \leq 2$, and especially $1.8 \leq x \leq$

2)) and copper selenide, as well as compounds that are known for use alone as positive electrode active materials for fluoride ion batteries, such as copper.

The proportion of covellite in the total (100 mass%) of the positive electrode active material in the positive electrode mixture may be 50 mass% to 100 mass%, 60 mass% to 100 mass%, 70 mass% to 100 mass%, 80 mass% to 100 mass%, 90 mass% to 100 mass%, 95 mass% to 100 mass%, 99 mass% to 100 mass% or 100 mass%, for example. That is, all of the positive electrode active material in the positive electrode mixture may be covellite.

The positive electrode active material may be in any form allowing it to function as a positive electrode active material for a fluoride ion battery, without any particular restrictions. The positive electrode active material may be particulate, for example. The mean particle diameter of the positive electrode active material particles may be 1 nm to 500 $\mu$m, 10 nm to 100 $\mu$m or 20 nm to 50 $\mu$m, for example.

<Solid electrolyte>

The positive electrode mixture for a fluoride ion battery of the disclosure comprises a solid electrolyte. The ion conductivity of the solid electrolyte at 80°C is $5.0 \times 10^{-6}$ S/cm or greater. By using a combination of such a specific solid electrolyte with covellite as the positive electrode active material, it is possible to accomplish charge-discharge of a battery with a mechanism suited for improving the coulombic efficiency and cycle characteristics of the battery.

The ion conductivity may be $7.5 \times 10^{-6}$ S/cm or higher, $1.0 \times 10^{-5}$ S/cm or higher, $2.5 \times 10^{-5}$ S/cm or higher, $5.0 \times 10^{-5}$ S/cm or higher, $7.5 \times 10^{-5}$ S/cm or higher, $1.0 \times 10^{-4}$ S/cm or higher, $2.5 \times 10^{-4}$ S/cm or higher, $5.0 \times 10^{-4}$ S/cm or higher or $7.5 \times 10^{-4}$ S/cm or higher, and $1.0 \times 10^{-2}$ S/cm or lower, $7.5 \times 10^{-3}$ S/cm or lower, $5.0 \times 10^{-3}$ S/cm or lower, $2.5 \times 10^{-3}$ S/cm or lower or $1.0 \times 10^{-3}$ S/cm or lower, or $9.0 \times 10^{-4}$ S/cm or lower. If the ion conductivity is within this range it will be possible to effectively improve the coulombic efficiency and cycle characteristics of the battery.

The ion conductivity can be calculated, for example, by using an electrochemical measurement system with a mounted frequency response analyzer by Bio-Logic for measurement of the alternating current impedance of a uniaxial-molded solid electrolyte pellet with a blocking electrode, measuring the total resistance from the solid electrolyte, and normalizing the value with respect to the total resistance based on the thickness of the solid electrolyte pellets and the area of the blocking electrodes.

In the positive electrode mixture for a fluoride ion battery of the disclosure, the solid electrolyte may have the composition represented by the following formula (2):

$$Pb_{1-y}Zr_yF_{2+2y}, \text{ wherein } 0 < y < 1 \qquad (2).$$

The present inventors have further found that even if covellite is used as the starting material, depending on the type of solid electrolyte, the structure of the covellite is altered during production of the positive electrode mixture, and in particular that when the starting material containing the covellite and solid electrolyte is mixed while applying mechanical impact to obtain the positive electrode mixture, the structure of the covellite is altered resulting in production of other copper sulfides such as digenite. While it is not our intention to be constrained by any particular theory, this is believed to be because the covellite undergoes progressive alteration by contact with the solid electrolyte, depending on the type of solid electrolyte. Such alteration of the covellite structure prevents charge-discharge of the battery from taking place by the desired insertion mechanism.

In contrast, a specific solid electrolyte having the composition of formula (2) above is resistant to changes in the structure of the covellite in the positive electrode mixture, thereby effectively improving the coulombic efficiency and cycle characteristics of the battery.

In formula (2), y may be 0.01 to 0.3. If y is within this range it will be possible to further inhibit alteration of the structure of the covellite in the positive electrode mixture, and to effectively improve the coulombic efficiency and cycle characteristics of the battery. The value of y may be 0.03 or greater, 0.05 or greater, 0.07 or greater, 0.09 or greater or 0.1 or greater, and 0.25 or lower, 0.2 or lower, 0.15 or lower, 0.12 or lower or 0.1 or lower. The value of y may also be 0.1, for a compound formula of $Pb_{0.9}Zr_{0.1}F_{2.2}$.

The specific solid electrolyte in the positive electrode mixture for a fluoride ion battery of the disclosure may be a commercial product, or it may be prepared by a common method. The method of preparing the specific solid electrolyte may be a method of mixing by mechanical milling between the metal element fluorides composing the specific solid electrolyte.

The content of the solid electrolyte in the positive electrode mixture may be 1 mass% or greater, 5 mass% or greater, 10 mass% or greater, 20 mass% or greater, 30 mass% or greater, 40 mass% or greater, 50 mass% or greater or 60 mass% or greater, and 99 mass% or lower, 95 mass% or lower, 90 mass% or lower, 80 mass% or lower or 70 mass% or lower, for example. The content may be 40 mass% to 90 mass%, 50 mass% to 80 mass% or 60 mass% to 70 mass%.

The solid electrolyte in the positive electrode mixture may be a specific solid electrolyte alone, or it may be a combination of a specific solid electrolyte with another solid electrolyte. Examples of solid electrolytes other than the specific solid electrolyte include fluorides of lanthanoid elements such as La and Ce; fluorides of alkali elements such as Li, Na, K, Rb and Cs; and fluorides of alkaline earth elements such as Ca, Sr and Ba.

The proportion of specific solid electrolyte in the total (100 mass%) of the solid electrolyte in the positive electrode mixture may be 30 mass% to 100 mass%, 40 mass% to 100 mass%, 50 mass% to 100 mass%, 60 mass% to 100 mass%, 70 mass% to 100 mass%, 80 mass% to 100 mass%, 90 mass% to 100 mass%, 95 mass% to 100 mass%, 99 mass% to 100 mass% or 100 mass%, for example. That is, all of the solid electrolytes in the positive electrode mixture may be the specific solid electrolyte.

The solid electrolyte assists in fluoride ion conduction.

The form of the solid electrolyte is not particularly restricted. The solid electrolyte may be particulate, for example. The size of the solid electrolyte is not particularly restricted so long as it can function as a solid electrolyte for a fluoride ion battery.

(Mass ratio of covellite content with respect to specific solid electrolyte content)

The mass ratio of the covellite content in the positive electrode mixture with respect to the specific solid electrolyte content is not particularly restricted. The mass ratio may be 0.1 to 10, 0.2 to 5 or 0.3 to 1, for example.

<Liquid electrolyte, conductive aid and binder>

The positive electrode mixture for a fluoride ion battery of the disclosure may optionally include a liquid electrolyte, a conductive aid and a binder.

(Liquid electrolyte)

The liquid electrolyte includes, for example, a solvent and a salt dissolved in the solvent.

The solvent may be an organic solvent, for example. The organic solvent may be any one that can dissolve the salt. Examples of organic solvents include one or more selected from among glyme groups represented by $R^1$-O$(CH_2CH_2O)_n$-$R^2$ (where $R^1$ and $R^2$ are each independently an alkyl group of 4 or fewer carbon atoms or a fluoroalkyl group of 4 or fewer carbon atoms, and n is in the range of 2 to 10), such as triethyleneglycol dimethyl ether (G3) and tetraethyleneglycol dimethyl ether (G4); cyclic carbonates such as ethylene carbonate (EC), fluoroethylene carbonate (FEC), difluoroethylene carbonate (DFEC), propylene carbonate (PC) and butylene carbonate (BC); and chain carbonates such as dimethyl carbonate (DMC), diethyl carbonate (DEC) and ethylmethyl carbonate (EMC). The organic solvent may also be an ionic liquid.

The salt to be dissolved in the solvent may be a fluoride salt, for example. The fluoride salt may be one or more selected from among inorganic fluoride salts, organic fluoride salts and ionic liquids, for example. An inorganic fluoride salt may be XF (where X is at least one selected from among Li, Na, K, Rb and Cs). An organic fluoride salt may be one having an ammonium cation such as tetramethylammonium cation and a fluorine-containing anion.

The liquid electrolyte may include, for example, the aforementioned solvent, and the aforementioned salt dissolved to a concentration of 0.1 mol to 40 mol or 1 mol to 10 mol with respect to 1 L of the solvent.

The proportion of liquid electrolyte in the total (100 mass%) of the electrolyte in the positive electrode mixture may be 0 mass% to 50 mass%, 0 mass% to 30 mass%, 0 mass% to 10 mass%, 0 mass% to 5 mass%, 0 mass% to 3 mass%, 0 mass% to 1 mass% or 0 mass%, for example. That is, the liquid electrolyte does not need to be included in the positive electrode mixture.

(Conductive aid)

The conductive aid is not particularly restricted so long as it has electron conductivity.

The conductive aid may be a carbon material, for example. Carbon materials to be used as conductive aids may be one or more selected from among carbon blacks such as acetylene black, furnace black and thermal black, and graphene, fullerene and carbon nanotubes, for example.

The content of the conductive aid in the positive electrode mixture is not particularly restricted and may be 1 mass% or greater, 5 mass% or greater or 10 mass% or greater, and 30 mass% or lower, 20 mass% or lower or 10 mass% or lower, for example.

The form of the conductive aid is not particularly restricted. The conductive aid may be particulate or fibrous, for example.

(Binder)

The binder may be one that is chemically and electrically stable in a fluoride ion battery.

The binder may be, for example, a fluorine-based binder such as a polyvinylidene fluoride (PVDF)-based binder or polytetrafluoroethylene (PTFE)-based binder, or it may be a rubber-based binder such as styrene-butadiene rubber (SBR).

The content of the binder in the positive electrode mixture is not particularly restricted.

<Other components>

The positive electrode mixture may include or not include various additives other than the components mentioned above. The types and contents of substances used as other components may be set as appropriate.

<Method for producing positive electrode mixture for fluoride ion battery>

The method for producing a positive electrode mixture for a fluoride ion battery according to the disclosure comprises the following steps:

providing a starting material containing covellite and a solid electrolyte, and
mixing the starting material while applying mechanical impact to the starting material.

For production of the positive electrode mixture for a fluoride ion battery of the disclosure it is necessary to mix the starting material while applying mechanical impact, and using covellite as the starting material together with a specific solid electrolyte allows the desired positive electrode mixture to be obtained without alteration of the covellite.

<Starting material provision step>

The method of the present disclosure includes providing a starting material comprising covellite and a solid electrolyte.

The covellite and solid electrolyte are as described above in relation to the positive electrode mixture for a fluoride ion battery of the disclosure.

<Starting material mixing step>

The method of the disclosure includes mixing the starting material while applying mechanical impact to the starting material. The mixing method may be a mechanical milling method, as an example. Specifically, the method may be mixing of the starting material using a ball mill apparatus. The operating system for a ball mill apparatus may be any system such as planetary, vibrating or rotational system. A given sample can be efficiently mixed using a planetary ball mill apparatus. This step may be carried out under an inert gas atmosphere.

When a planetary ball mill apparatus is used to mix the starting material, the platform rotation speed is not particularly restricted and may be 300 rpm or higher, 400 rpm or higher, 500 rpm or higher or 600 rpm or higher, and 1000 rpm or lower, 900 rpm or lower, 800 rpm or lower, 700 rpm or lower or 600 rpm or lower, for example. The platform rotation speed may also be 600 rpm.

When a planetary ball mill apparatus is used for mixing of the starting material, the mixing time is not particularly restricted but may be 0.5 hours or more, 1 hour or more, 2 hours or more or 3 hours or more, and 10 hours or less, 8 hours or less, 6 hours or less, 4 hours or less or 3 hours or less. The mixing time may also be 3 hours.

<Fluoride ion battery>

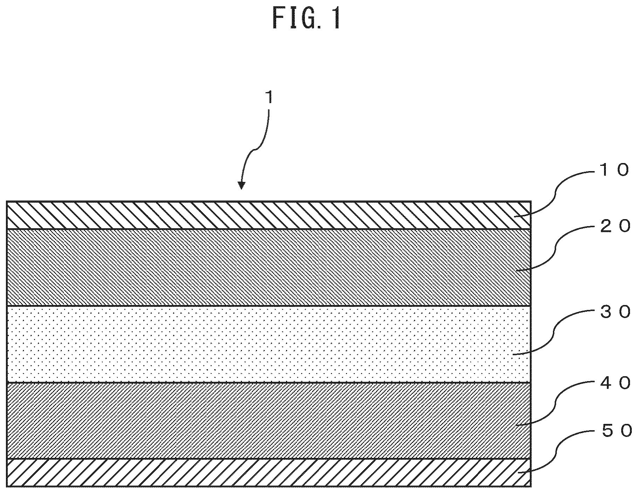

As shown in Fig. 1, the fluoride ion battery 1 of the disclosure has a positive electrode active material layer 20, the positive electrode active material layer comprising a positive electrode mixture for a fluoride ion battery of the disclosure. Since the fluoride ion battery of the disclosure comprises a positive electrode mixture for a fluoride ion battery of the disclosure, it has improved coulombic efficiency and cycle characteristics.

As also shown in Fig. 1, the fluoride ion battery 1 of the disclosure has a positive electrode current collector layer 10, a positive electrode active material layer 20, an electrolyte layer 30, a negative electrode active material layer 40 and a negative electrode current collector layer 50, in that order.

The fluoride ion battery of the disclosure may be a liquid battery comprising an electrolyte solution as the electrolyte layer, or it may be a solid-state battery having a solid electrolyte layer as the electrolyte layer. The term "solid-state battery" as used herein refers to a battery using at least a solid electrolyte as the electrolyte, and the solid-state battery may also employ a combination of a solid electrolyte and a liquid electrolyte as the electrolyte. Alternatively, the solid-state battery of the disclosure may be an all-solid-state battery, i.e. a battery employing only a solid electrolyte as the electrolyte.

The fluoride ion battery may be either a primary battery or a secondary battery.

The form of the fluoride ion battery may be, for example, a coin, laminated, cylindrical or rectilinear form.

Fluoride ion batteries can be produced by dry or wet molding of each layer.

The fluoride ion battery of the disclosure can be suitably used in one or more types of vehicles selected from among hybrid electric vehicles (HEV), plug-in hybrid electric vehicles (PHEV) and battery electric vehicles (BEV).

The elements used to construct the fluoride ion battery of the disclosure will now be described.

<Positive electrode current collector layer>

Examples of materials for the positive electrode current collector layer include lead, stainless steel (SUS), aluminum, nickel, iron, titanium, platinum and carbon.

The form of the positive electrode current collector layer may be a foil, mesh or porous form.

<Positive electrode active material layer>

The positive electrode active material layer comprises a positive electrode mixture for a fluoride ion battery of the disclosure. The positive electrode mixture for a fluoride ion battery of the disclosure is as described above in relation to the positive electrode mixture for a fluoride ion battery of the disclosure.

The form of the positive electrode active material layer is not particularly restricted, and it may be an essentially flat sheet-like form.

The thickness of the positive electrode active material layer is not particularly restricted and may be a thickness suited for the structure of the fluoride ion battery. The thickness of the positive electrode active material layer may be 100 nm to 1 mm, for example.

<Electrolyte layer>

The electrolyte layer includes at least an electrolyte. The electrolyte may be either a solid electrolyte or a liquid electrolyte.

When the fluoride ion battery of the disclosure is a solid-state battery, the electrolyte layer may include a solid electrolyte and optionally a binder.

The solid electrolyte may be appropriately selected from among those mentioned above as examples to be included in the positive electrode mixture. The solid electrolyte to be included in the positive electrode mixture and the solid electrolyte in the electrolyte layer may be of the same type or different types. That is, the solid electrolyte in the electrolyte layer does not need to be a specific solid electrolyte of the disclosure.

The binder is as described above in relation to the positive electrode mixture for a fluoride ion battery of the disclosure.

The electrolyte layer may include a liquid electrolyte and a separator to hold the liquid electrolyte. These are included particularly when the fluoride ion battery of the disclosure is a liquid battery.

The liquid electrolyte is as described above in relation to the positive electrode mixture for a fluoride ion battery of the disclosure.

The separator used may be one that is known as a separator for a fluoride ion battery.

A portion of the electrolyte layer may be a negative electrode active material layer formed by charging, for example. Specifically, the electrolyte layer may be one that produces de fluorination reaction of the metal fluoride as a solid electrolyte at the interface between the electrolyte layer and negative electrode current collector layer during charge of the fluoride ion battery, to produce a metal layer (such as a Pb layer) as a negative electrode active material layer at their interface.

The form of the electrolyte layer is not particularly restricted, and it may be an essentially flat sheet-like form.

The thickness of the electrolyte layer is not particularly restricted and may be a thickness suited for the structure of the fluoride ion battery. The thickness of the electrolyte layer may be 100 nm to 1 mm, for example.

<Negative electrode active material layer>

The negative electrode active material layer comprises a negative electrode active material, and may also optionally comprise an electrolyte, a conductive aid and a binder.

The negative electrode active material may be one or more selected from among metals alone, alloys, metal oxides, metal fluorides, carbon materials and polymer materials, for example. The metal elements composing the negative electrode active material may be one or more selected from among La, Ca, Al, Eu, Li, Si, Ge, Sn, In, V, Cd, Cr, Fe, Zn, Ga, Ti, Nb, Mn, Yb, Zr, Sm, Ce, Mg and Pb, for example. The carbon material composing the negative electrode active material may be one or more selected from among graphite, coke and carbon nanotubes, for example. The polymer material composing the negative electrode active material may be one or more selected from among polyaniline, polypyrrole, polyacetylene and polythiophene.

The negative electrode active material may be $Pb_{0.9}Zr_{0.1}F_{2.2}$, for example.

The electrolyte, conductive aid and binder are as described above in relation to the positive electrode mixture for a fluoride ion battery of the disclosure.

The form of the negative electrode active material layer is not particularly restricted, and it may be an essentially flat sheet-like form.

The thickness of the negative electrode active material layer is not particularly restricted and may be a thickness suited for the structure of the fluoride ion battery. The thickness of the negative electrode active material layer may be 100 nm to 1 mm, for example.

<Negative electrode current collector layer>

Examples of materials for the negative electrode current collector layer include stainless steel (SUS), copper, nickel, iron, titanium, platinum and carbon.

The form of the negative electrode current collector layer may be a foil, mesh or porous form.

[Examples]

<<Example 1>>

<Fabrication of positive electrode mixture>

(Provision of starting material)

The starting material was provided in the following manner.

Copper sulfide (compositional formula: CuS), as covellite, was prepared as a positive electrode active material (product of Mitsuwa Chemicals Co., Ltd.).

Lead fluoride ($PbF_2$) and zirconium fluoride ($ZrF_4$) were weighed out in an argon (Ar) atmosphere glove box to the desired compositional ratio for the solid electrolyte. These were mixed by mechanical milling using a planetary ball mill apparatus (PL-7 Premium Line planetary ball mill by Fritsch Co.) to obtain powdered $Pb_{0.9}Zr_{0.1}F_{2.2}$ as a solid electrolyte. The ion conductivity was $9.0 \times 10^{-4}$ S/cm at 80°C. The ion conductivity was calculated using an electrochemical measurement system mounting a frequency response analyzer by Bio-Logic Co., Ltd., for AC impedance measurement of $Pb_{0.9}Zr_{0.1}F_{2.2}$ pellets obtained by uniaxial molding, with a blocking electrode used to measure the total resistance due to $Pb_{0.9}Zr_{0.1}F_{2.2}$, and normalizing against the total resistance value using the thickness of the $Pb_{0.9}Zr_{0.1}F_{2.2}$ pellets and the area of the blocking electrode.

<Mixture of starting material>

Covellite copper sulfide (compositional formula: CuS) as a positive electrode active material (product of Mitsuwa Chemicals Co., Ltd.), $Pb_{0.9}Zr_{0.1}F_{2.2}$ as a solid electrolyte and acetylene black (AB) as a conductive aid were mixed by mechanical milling using a planetary ball mill apparatus (PL-7 Premium Line planetary ball mill by Fritsch Co.) to obtain a powdered positive electrode mixture. The mass ratio of the positive electrode active material, solid electrolyte and conductive aid was 30:66:4. The ball mill mixing was carried out with a platform rotation speed of 600 rpm in a dry argon atmosphere over a period of 3 hours.

<Fabrication of all-solid-state fluoride ion battery>

A green compact was formed using 12 mg of the obtained positive electrode mixture powder as the positive electrode active material layer (working electrode).

The green compact was formed as an electrolyte layer, using 150 mg of $La_{0.95}Sr_{0.05}F_{2.95}$ powder as the solid electrolyte.

For the negative electrode active material layer (counter electrode), a green compact was formed using 50 mg of a mixture of $Pb_{0.9}Zr_{0.1}F_{2.2}$ powder as the negative electrode active material and AB powder as a conductive aid. The AB content of the mixture was 5 mass% with respect to the total mixture. A 220 mg Pb board was contact bonded onto one side surface of the formed negative electrode active material layer (the side that was later to be disposed in contact with the negative electrode current collector layer). It is believed that using such a Pb board inhibited reduction in cycle characteristics on the counter electrode side when carrying out a charge-discharge test using a half cell. This suggests that the positive electrode active material layer (working electrode) in this example was more dominant for the cycle characteristics of the testing half cell.

A platinum foil as the positive electrode current collector layer, a positive electrode active material layer, an electrolyte layer, a negative electrode active material layer and an aluminum foil as the negative electrode current collector layer, were layered in that order to fabricate an all-solid-state fluoride ion battery for a testing half cell. The diameter of the all-solid-state fluoride ion battery was 11.28 mm. The all-solid-state fluoride ion battery was set in a ceramic cylindrical container with an inner diameter of 11.28 mm, and anchored between stainless steel cylinders with diameters of 11.28 mm from both the negative electrode current collector layer and the positive electrode current collector layer sides.

<Comparative Example 1>

An all-solid-state fluoride ion battery was fabricated in the same manner as Example 1, except that $Pb_{0.6}Sn_{0.4}F_2$ was used as the solid electrolyte in the positive electrode mixture.

The $Pb_{0.6}Sn_{0.4}F_2$ used was a sample synthesized by mechanical milling mixture of $PbF_2$ and tin fluoride ($SnF_2$), as starting materials. The ion conductivity of the solid electrolyte measured by the method described above was $4.2 \times 10^{-3}$ S/cm at 80°C. In other words, the solid electrolyte of Comparative Example 1 had higher ion conductivity than the solid electrolyte of Example 1.

<Comparative Example 2>

An all-solid-state fluoride ion battery was fabricated in the same manner as Example 1, except that $La_{0.95}Sr_{0.05}F_{2.95}$ was used as the solid electrolyte in the positive electrode mixture.

The $La_{0.95}Sr_{0.05}F_{2.95}$ used was a sample synthesized by solid-phase reaction of lanthanum fluoride ($LaF_3$) and strontium fluoride ($SrF_2$) as starting materials, by a firing method. The ion conductivity of the solid electrolyte measured by the method described above was $8.8 \times 10^{-5}$ S/cm at 80°C.

<Evaluation>

<Crystal structure of copper sulfide in positive electrode active material layer>

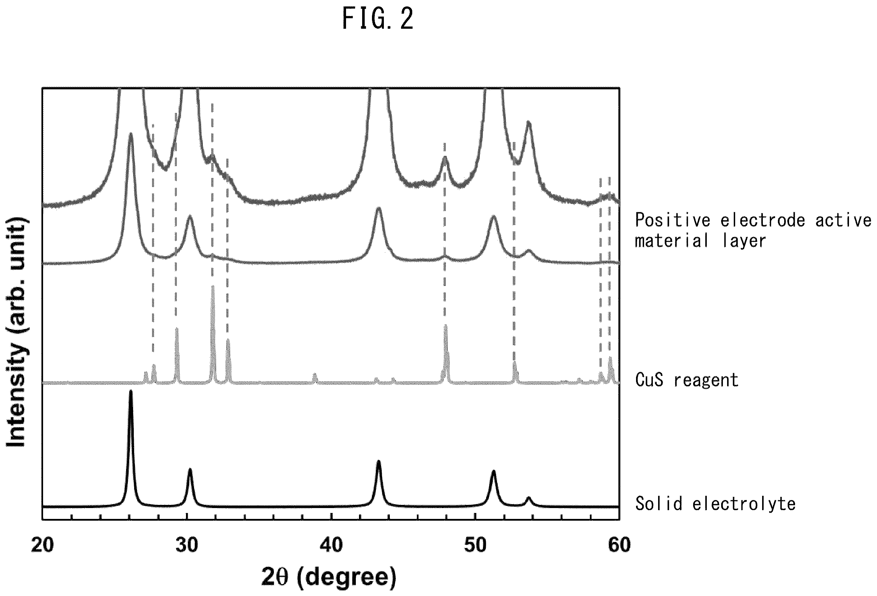

XRD measurement was conducted on the sample for the positive electrode active material layer of each example which was formed from the positive electrode mixture, in the discharged state before operation of the battery. The XRD measurement was carried out by a concentration method in which $CuK\alpha$ rays were irradiated using a SmartLab by Rigaku Corp. as the X-ray diffractometer, under an inert gas atmosphere with a tube voltage of 45 kV and a tube current of 200 mA. The measurement described above was carried out after sealing the sample in an airtight sample stage with an argon atmosphere. The sample was mounted on a non-reflecting Si board as the substrate. The XRD patterns for each of the obtained examples are shown in Figs. 2 to 4.

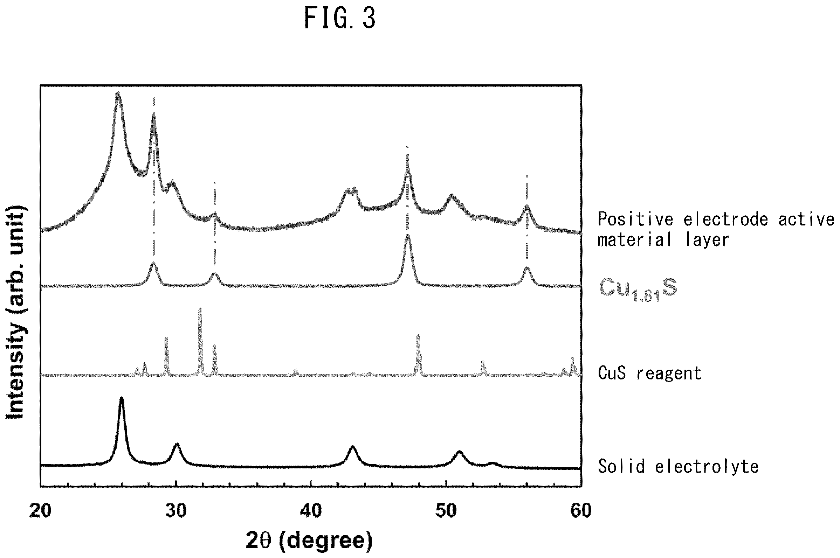

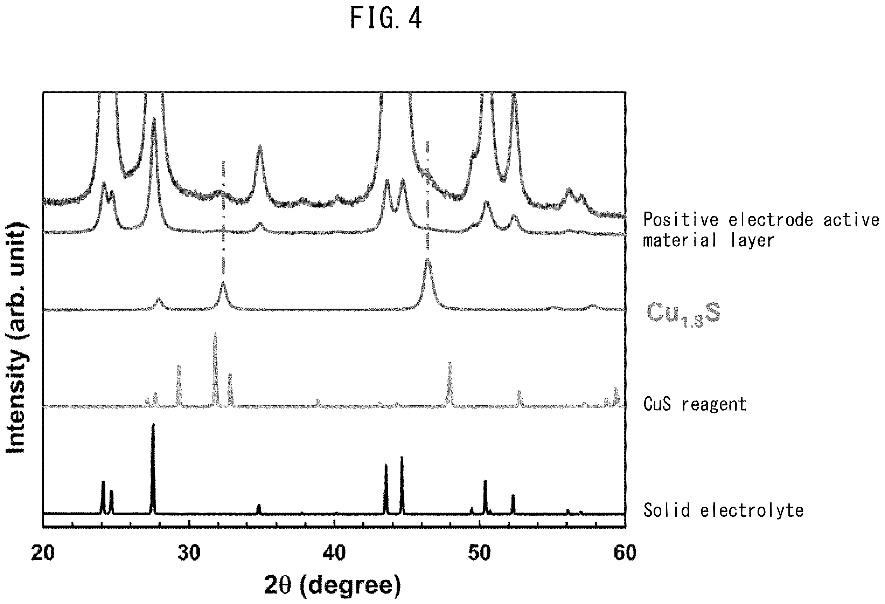

For comparison, the patterns of the covellite (CuS) reagents used and the solid electrolytes of each of the examples in the positive electrode active material layers are also shown in the drawings. Figs. 2 and 4 also show XRD measurement results for the positive electrode active material layers magnified in the vertical axis direction, highlighting the diffraction lines due to copper sulfide ($Cu_xS$). Figs. 3 and 4 additionally show patterns calculated based on ICDD card data for digenite (Digenite: $Cu_{1.81}S$).

In Example 1 the covellite (CuS, hexagonal, $P6_3/mmc$) used as starting material for the positive electrode mixture maintained its crystal structure even in the positive electrode active material layer, as shown in Fig. 2.

In contrast, in Comparative Examples 1 and 2, no covellite (CuS) was present in the positive electrode active material layer as copper sulfide, while digenite ($Cu_{1.81}S$ and $Cu_{1.8}S$; cubic, space group Fm-3m) was present in the positive electrode active material layer, as shown in Figs. 3 and 4. This is believed to be because in the Comparative Examples, the chemical stability of the covellite with respect to the solid electrolyte was low, resulting in alteration of the covellite to digenite during the course of fabricating the positive electrode mixture.

<Evaluation of fluoride ion batteries>

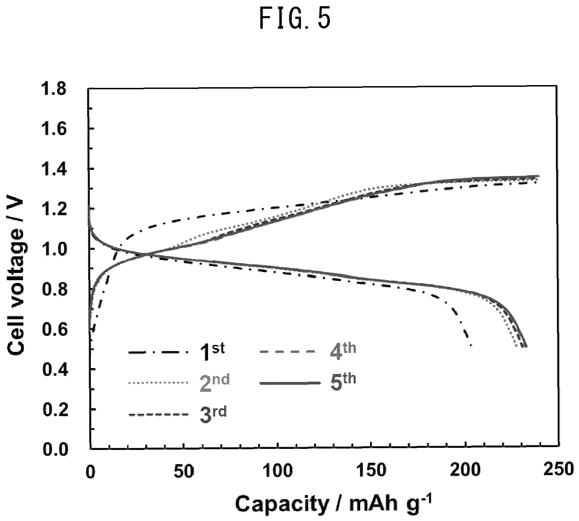

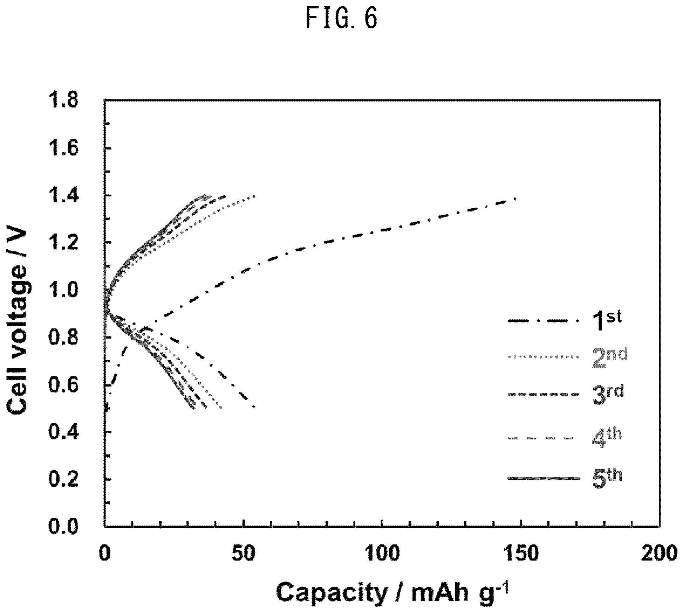

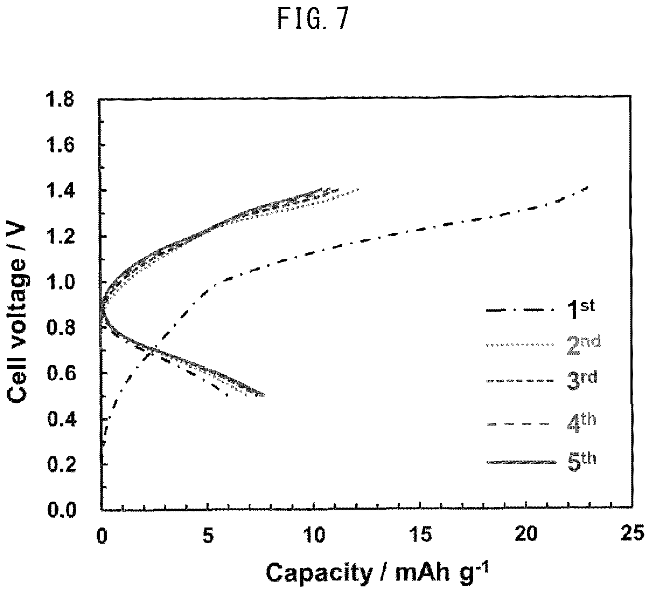

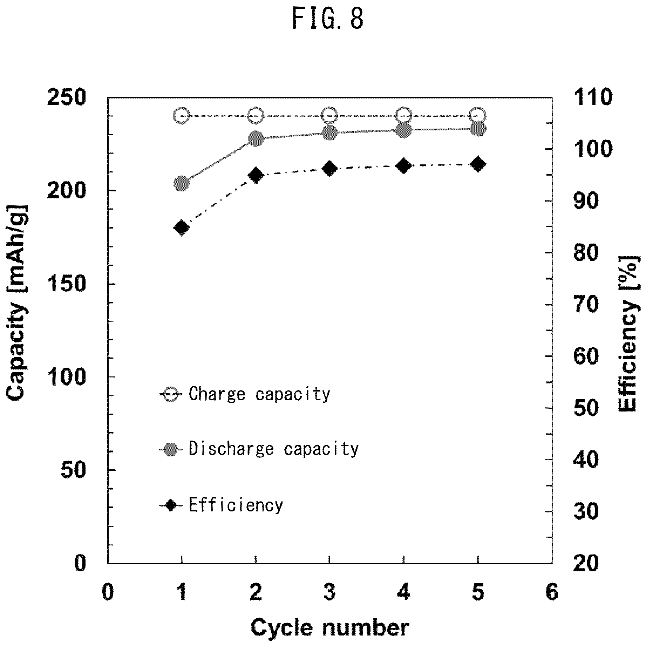

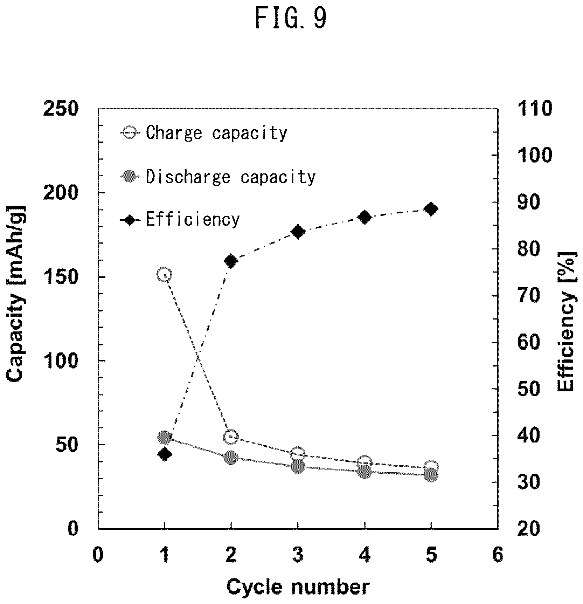

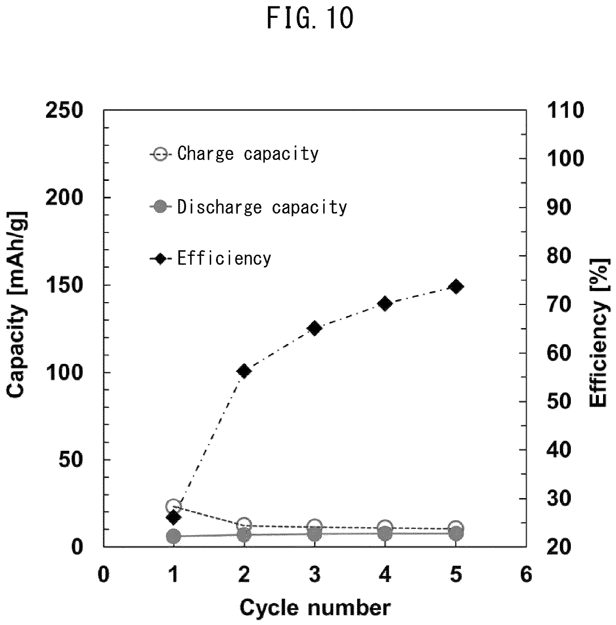

Each of the fluoride ion batteries of the Examples was vacuum pumped in a sealed container while carrying out charge and discharge 5 times at a testing temperature of 80°C and a current density of 0.05 mA/cm$^2$. The final conditions for charging were selected as either the maximum voltage of 1.4 V or a charge capacity of 240 mAh/g, whichever was reached earlier. The reason for using the charge capacity value of 240 mAh/g is that previous research on crystal structure analysis has suggested that charge-discharge of covellite (CuS) by the insertion reaction mechanism will proceed up to this capacity range. The final discharge conditions were a minimum voltage of 0.5 V. A frequency response analyzer-mounted electrochemical measurement system (VMP-300 high performance electrochemical measurement system by Bio-Logic) was used for the charge-discharge test. Figs. 5 to 7 show charge-discharge curves obtained in each of the example tests. The results of the charge-discharge test of each of the examples are shown in Figs. 8 to 10, as changes in charge capacity, discharge capacity and coulombic efficiency for each cycle. Table 1 shows the charge capacity and discharge capacity for the first and fifth cycles, the capacity retention (fifth cycle capacity/first cycle capacity $\times$ 100) and the coulombic efficiency for the first cycle.

[Table 1]

Table 1

| | Solid electrolyte | Copper sulfide in positive electrode active material layer | Charge capacity [mAh/g] | | Discharge capacity [mAh/g] | | Cycle characteristics | | | Initial coulombic efficiency [%] |
| | | | | | | | Capacity retention [%] | | Reduction | |
| | | | 1st | 5th | 1st | 5th | Charge | Discharge | | |
| Example 1 | $Pb_{0.9}Zr_{0.1}F_{2.2}$ | Covellite (CuS) | 240.0 | 240.0 | 203.6 | 232.4 | 100 | 114 | No | 85 |
| Comp. Example 1 | $Pb_{0.6}Sn_{0.4}F_2$ | Digenite ($Cu_{1.81}S$) | 151.3 | 36.3 | 54.4 | 32.1 | 24 | 59 | Yes (charge/discharge) | 36 |
| Comp. Example 2 | $La_{0.95}Sr_{0.05}F_{2.95}$ | Digenite ($Cu_{1.8}S$) | 23.0 | 10.4 | 6.0 | 7.7 | 45 | 128 | Yes (charge) | 26 |

As shown in Figs. 5 to 10 and Table 1, the coulombic efficiency and cycle characteristics were improved with the fluoride ion battery of Example 1 which used the construction of the invention for the positive electrode mixture composing the positive electrode active material layer.

In contrast, the fluoride ion batteries of the Comparative Examples had inferior coulombic efficiency and cycle characteristics compared to the fluoride ion battery of Example 1.

Generally speaking, charge-discharge proceeds more efficiently when the solid electrolyte in the positive electrode active material layer of a fluoride ion battery has higher ion conductivity, which improves the properties of the battery including capacity, coulombic efficiency and cycle characteristics.

However, even though the ion conductivity of $Pb_{0.9}Zr_{0.1}F_{2.2}$ as the solid electrolyte of Example 1 was lower than the ion conductivity of $Pb_{0.6}Sn_{0.4}F_2$ as the solid electrolyte of Comparative Example 1, the capacity, coulombic efficiency and cycle characteristics of the battery of Example 1 were higher than the properties of the battery of Comparative Example 1. This suggests that the effect of the disclosure is exhibited by using a combination of a specific copper sulfide, i.e. covellite, as the positive electrode active material, and a specific solid electrolyte, i.e. a solid electrolyte having the predetermined ion conductivity, and especially $Pb_{0.9}Zr_{0.1}F_{2.2}$, in the positive electrode mixture.

REFERENCE SIGNS LIST

1 Fluoride ion battery
10 Positive electrode current collector layer
20 Positive electrode active material layer
30 Electrolyte layer
40 Negative electrode active material layer
50 Negative electrode current collector layer

**Claims**

1. A positive electrode mixture for a fluoride ion battery, comprising:

   wherein the positive electrode mixture comprises covellite and a solid electrolyte, and
   wherein the ion conductivity of the solid electrolyte at 80°C is $5.0 \times 10^{-6}$ S/cm or higher.

2. The positive electrode mixture for a fluoride ion battery according to claim 1, wherein the covellite has the composition of the following formula (1):

$$Cu_xS, \text{ wherein } 0.80 \leq x \leq 1.30 \qquad (1).$$

3. The positive electrode mixture for a fluoride ion battery according to claim 1, wherein the solid electrolyte has the composition of the following formula (2):

$$Pb_{1-y}Zr_yF_{2+2y}, \text{ wherein } 0 < y < 1 \qquad (2).$$

4. The positive electrode mixture for a fluoride ion battery according to claim 3, wherein y in formula (2) is 0.01 to 0.3.

5. A fluoride ion battery,

   having a positive electrode active material layer, and
   the positive electrode active material layer comprising a positive electrode mixture for a fluoride ion battery according to any one of claims 1 to 4.

6. The method for producing a positive electrode mixture for a fluoride ion battery according to any one of claims 1 to 4, comprising the following steps:

   providing a starting material comprising covellite and a solid electrolyte, and

mixing the starting material while applying mechanical impact to the starting material.

FIG. 1

FIG. 2

EP 4 746 074 A1

## FIG. 3

Positive electrode active material layer

$Cu_{1.81}S$

CuS reagent

Solid electrolyte

Intensity (arb. unit)

2θ (degree)

EP 4 746 074 A1

# FIG. 4

Positive electrode active material layer

$Cu_{1.8}S$

CuS reagent

Solid electrolyte

Intensity (arb. unit)

2θ (degree)

EP 4 746 074 A1

FIG. 5

FIG. 6

FIG. 7

FIG. 8

# FIG. 9

# FIG. 10

Europäisches
Patentamt

European
Patent Office

Office européen
des brevets

# EUROPEAN SEARCH REPORT

**Application Number**

EP 25 20 3955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2018 186067 A (TOYOTA MOTOR CORP) 22 November 2018 (2018-11-22) * the whole document * * | 1-3,5,6 | INV. H01M4/58 H01M10/054 H01M10/36 ADD. H01M10/0561 |
| A | BANERJEE ARGHYA NARAYAN ET AL: "'Beyond Li-ion technology'-a status review", NANOTECHNOLOGY, IOP PUBLISHING, ENGLAND, vol. 35, no. 47, 4 September 2024 (2024-09-04), XP020511427, ISSN: 0957-4484, DOI: 10.1088/1361-6528/AD690B [retrieved on 2024-09-04] * Section 6.1 * | 1-6 | |
| A | NIE QIAOJUN ET AL: "Effect of moisture on the phase transition of [beta]-PbSnF4 at ambient temperature as the fast fluoride ion conductor", SOLID STATE IONICS, vol. 405, 1 February 2024 (2024-02-01), page 116454, XP093369992, NL ISSN: 0167-2738, DOI: 10.1016/j.ssi.2024.116454 * page 1 * | 1-6 | TECHNICAL FIELDS SEARCHED (IPC) H01M |
| A | RYOJI KANNO ET AL: "IONIC CONDUCTIVITY OF TETRAGONAL PBSNF4 SUBSTITUTED BY ALIOVALENT CATIONS ZR4+, AL3+, GA3+, IN3+ AND NA+", SOLID STATE IONICS, NORTH HOLLAND PUB. COMPANY. AMSTERDAM; NL, NL, vol. 51, no. 1 / 02, 1 March 1992 (1992-03-01), pages 53-59, XP000351805, ISSN: 0167-2738, DOI: 10.1016/0167-2738(92)90343-N * the whole document * * | 1-6 | |

The present search report has been drawn up for all claims

| Place of search | Date of completion of the search | Examiner |
|---|---|---|
| The Hague | 24 February 2026 | Standaert, Frans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 3955

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2026

| Patent document cited in search report | Publication date | Patent family member(s) | | Publication date |
|---|---|---|---|---|
| JP 2018186067 A | 22-11-2018 | JP | 6933108 B2 | 08-09-2021 |
| | | JP | 2018186067 A | 22-11-2018 |

For more details about this annex : see Official Journal of the European Patent Office, No. 12/82

**EP 4 746 074 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018186067 A

- JP 2024104108 A